(19) Europäisches Patentamt
European Patent Office
Office européen des brevets

(11) **EP 2 549 752 A1**

(12) **EUROPEAN PATENT APPLICATION**
published in accordance with Art. 153(4) EPC

(43) Date of publication:
**23.01.2013 Bulletin 2013/04**

(51) Int Cl.:
*H04N 7/18* (2006.01)  *G08B 25/00* (2006.01)
*H04N 5/225* (2006.01)  *H04N 5/232* (2006.01)

(21) Application number: **11755960.9**

(22) Date of filing: **21.01.2011**

(86) International application number:
**PCT/JP2011/051048**

(87) International publication number:
**WO 2011/114770 (22.09.2011 Gazette 2011/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.03.2010 JP 2010057122**

(71) Applicant: **Omron Corporation
Kyoto-shi, Kyoto 600-8530 (JP)**

(72) Inventors:
• **YOSHIMITSU Yuji
Kyoto-shi
Kyoto 600-8530 (JP)**

• **NAITO Takeshi
Kyoto-shi
Kyoto 600-8530 (JP)**
• **SERIKAWA Masataka
Kyoto-shi
Kyoto 600-8530 (JP)**

(74) Representative: **Osha Liang SARL
32, avenue de l'Opéra
75002 Paris (FR)**

(54) **SURVEILLANCE CAMERA TERMINAL**

(57)    A surveillance camera terminal is provided which enables tracking of an object to be performed in real time by identifying the object in a handover area shared with another surveillance camera terminal (1) which takes over the tracking of the object during the presence of the object in the handover area. A handover surveillance camera (1) notifies a takeover surveillance camera terminal (1) of the result of processing of a frame image taken thereby by wireless communication. The result of processing thus notified of is indicative of the position of each of persons on the frame image including a suspicious individual being tracked. The handover surveillance camera terminal (1) and the takeover surveillance camera terminal (1) communicate directly with each other by their respective second wireless communication sections (19). Therefore, a delay in communication between the handover surveillance camera terminal (1) and the takeover surveillance camera terminal (1) can be limited sufficiently.

FIG.2

EP 2 549 752 A1

**Description**

Technical Field

The present invention relates to a surveillance camera terminal configured to process a frame image taken by imaging a surveillance area assigned to this terminal and track a person positioned in the surveillance area. More particularly, the present invention relates to a surveillance camera terminal configured to hand over a person being tracked to another surveillance camera terminal assigned a surveillance area partially overlapping that of the subject terminal, thereby tracking the person over a wide area.

Background Art

Conventionally, a plurality of surveillance camera terminals have been used at a station, shopping center, busy streets or a like place where an unspecified number of people gather, in order to detect a person such as a suspicious individual having showed unusual behavior or a like person (hereinafter will be simply referred to as "suspicious individual") and track the suspicious individual detected. In tracking such a suspicious individual over a wide area by using the plurality of surveillance cameral terminals, the surveillance camera terminal which tracks the suspicious individual is switched to another one as the suspicious individual travels. When switching the surveillance camera terminal which tracks the suspicious individual to another one, the suspicious individual is handed over to the surveillance camera terminal which takes over the tracking. Surveillance camera terminals which can hand over the suspicious individual to each other have their respective surveillance areas partially overlapping each other. The surveillance camera terminal which takes over the tracking is caused to identify the suspicious individual among persons being imaged by using a frame image that is taken when the suspicious individual is positioned in the overlapped area (hereinafter will be referred to as "handover area").

If the identification of the suspicious individual is unsuccessful, then the surveillance camera terminal having taken over the tracking tracks another person who is not the suspicious individual having been tracked so far. Therefore, the tracking of the suspicious individual results in a failure.

In order to reduce the cost to be incurred for construction of a system by reducing the number of surveillance camera terminals to be used in the entire system, it has also been a practice to use surveillance camera terminals each of which is capable of changing its imaging visual field with travel of the suspicious individual, thereby increasing the surveillance area assigned to each surveillance camera terminal (see Patent Literature 1).

Citation List

Patent Literature

Patent Literature 1: Japanese Patent Laid-Open Publication No. 2006-310901

Summary of Invention

Technical Problem

When the suspicious individual is handed over between surveillance camera terminals, however, wireless communication between the two surveillance camera terminals is sometimes performed not directly, but through a wireless communication path via another surveillance camera terminal. For example, when the surveillance camera terminal tracking the suspicious individual forms a wireless communication path to a surveillance camera terminal which has to take over the tracking of the suspicious individual conditionally on a received signal strength, a wireless communication path via another surveillance camera terminal is sometimes formed. As the number of surveillance camera terminals located in this wireless communication path (which are so-called relay nodes) increases, a longer delay occurs in communication between the two terminals which hand over the suspicious individual therebetween. As a result, a delay occurs in identification of the suspicious individual in the handover area, thus making it impossible to track the suspicious individual in real time and give a watchman or the like a proper instruction with respect to the suspicious individual. That is, the suspicious individual cannot be caught and is allowed to slip.

With the surveillance camera terminals which are capable of changing their respective imaging visual fields in the surveillance areas, a delay in identification of the suspicious individual causes the two surveillance camera terminals which hand over the suspicious individual therebetween to fail to obtain any frame image that images the suspicious individual positioned in the handover area, thus resulting in a failure to track the suspicious individual.

An object of the present invention is to provide a surveillance camera terminal which is capable of tracking an object in real time by identifying the object positioned in a handover area shared with another surveillance camera terminal which takes over the tracking of the object during the presence of the object in the handover area.

Solution to Problem

In order to accomplish the object, a surveillance camera terminal according to the present invention is constructed as follows.

Object extracting means is configured to extract an obj ect being imaged by processing a frame image taken by imaging means which images a surveillance area assigned to the subject terminal. Tracking means is configured to track the object extracted by object extracting means in the surveillance area. For example, frame images taken by the imaging means are processed in time sequence to track the position of the object with lapse of time. Handover means is configured to perform wireless communication with a counterpart terminal assigned a surveillance area partially overlapping the surveillance area of the subject terminal to hand over the object being tracked by the tracking means to the counterpart terminal in a handover area in which the surveillance areas of the respective terminals overlap each other. That is, when the object being tracked travels from the surveillance area of the subject terminal into that of the counterpart terminal, the handover means causes the counterpart terminal to identify the object being tracked in the handover area thereby allowing the counterpart terminal to take over the tracking of the object.

Wireless communication path forming means is configured to form a communication path through which the wireless communication means communicates directly with the counterpart terminal to which the object is handed over when the handover means hands over the object. Such a wireless communication path can limit a delay in wireless communication between the terminals which occurs in handover of the object. Therefore, the counterpart terminal is allowed to identify the object being tracked during the presence of the object in the handover area. As a result, the object can be tracked in real time.

It is possible that: the wireless communication means includes a first wireless communication section having a non-directional antenna and a second wireless communication section having a directional antenna; and the wireless communication path forming means causes the first wireless communication section to transmit a handover request to the counterpart terminal to which the handover means hands over the object and adjusts an orientation of directivity of the directional antenna to an orientation suited for direct communication with the counterpart terminal. In this case, the counterpart terminal which has received the handover request is simply configured to adjust the orientation of directivity of its directional antenna to an orientation suited for direction communication with the terminal which has transmitted the handover request (i.e., the terminal which is tracking the object at that time). Thus, the terminals perform wireless communication therebetween during the handover of the object by their respective second wireless communication sections.

This feature can ensure a necessary received signal strength for wireless communication between the terminals during the handover of the object while limiting a delay in communication due to a lowered throughput.

Prediction means may be provided which is configured to predict the counterpart terminal to which the handover means has to hand over the object being tracked based on a traveling route of the object being tracked in the surveillance area by the tracking means. In this case, the wireless communication path forming means is simply configured to form a wireless communication path for direct communication with the counterpart terminal predicted by the prediction means. This feature enables a wireless communication path to be formed for direct communication between the terminals which have to hand over the object therebetween before the object being tracked enters the handover area.

The imaging means may have a fixed imaging visual field or a variable imaging visual field which can be changed by imaging visual field control means in accordance with a position of the object being tracked by the tracking means.

Advantageous Effects of Invention

According to the present invention, it is possible to identify the object in the handover area in which the surveillance camera terminal hands over the object to another surveillance camera terminal which takes over the tracking of the object during the presence of the object in the handover area, thereby to track the object in real time.

Brief Description of Drawings

FIG. 1 is a schematic view illustrating the configuration of a wide-area surveillance system.
FIG. 2 is a block diagram illustrating the configuration of a relevant portion of a surveillance camera terminal.
FIG. 3 is a view illustrating a surveillance area assigned to the surveillance camera terminal and an imaging area.
FIG. 4 is a view illustrating the relationship between surveillance areas of adjacent surveillance camera terminals.
FIG. 5 is a flowchart of an operation of a surveillance camera terminal.
FIG. 6 is a flowchart of a tracking process.
FIG. 7 is a view illustrating images taken during the tracking process.
FIG. 8 is a flowchart of a takeover process.

Description of Embodiments

Hereinafter, a surveillance camera terminal as an embodiment of the present invention will be described.

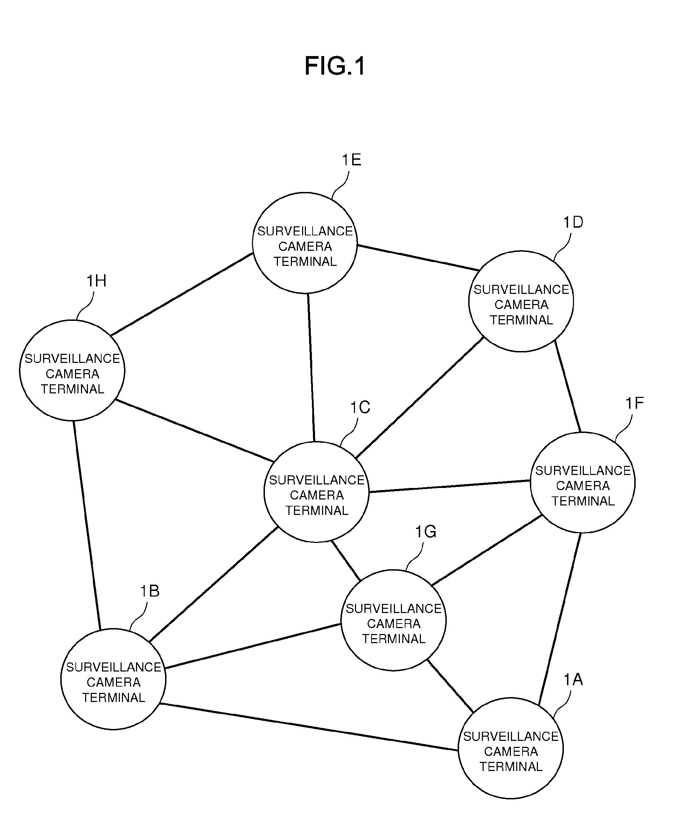

FIG. 1 is a schematic view illustrating the configuration of a wide-area surveillance system using surveillance camera terminals according to an embodiment of the present invention. The wide-area surveillance system is a network system having a plurality of surveillance camera terminals 1 (1A to 1H). The wide-area surveillance system is an ad hoc network system for example.

The surveillance camera terminals 1 are capable of data communication therebetween either directly or via another surveillance camera terminal 1. The data communication between the surveillance camera terminals 1 is performed wirelessly.

The number of surveillance camera terminals 1 forming the wide-area surveillance system is not limited to eight as illustrated in FIG. 1, but may be any plural number. The lines interconnecting the surveillance camera terminals 1 shown in FIG. 1 are links. In the following description, the surveillance camera terminals are denoted by reference numeral 1 particularly when the surveillance camera terminals 1A to 1H are described without distinction therebetween.

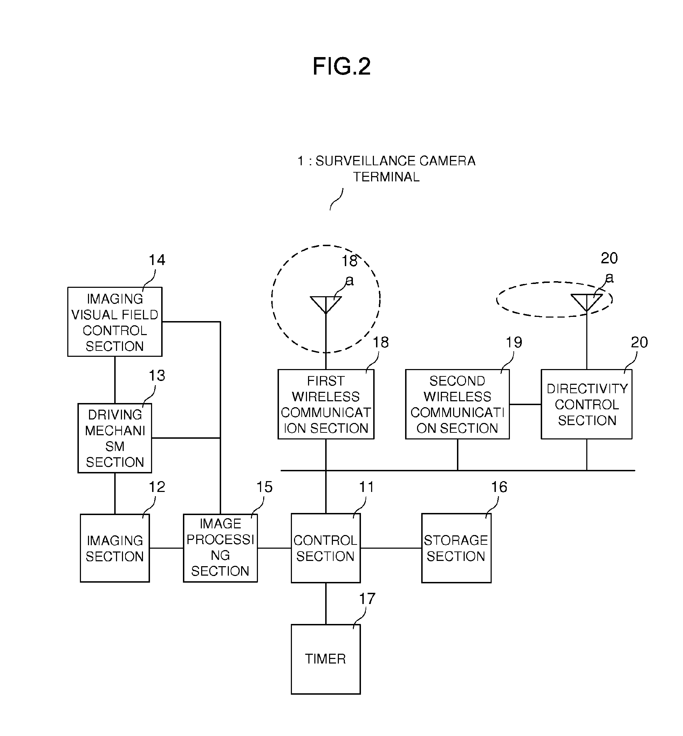

FIG. 2 is a view illustrating a relevant portion of a surveillance camera terminal. The surveillance camera terminal 1 includes a control section 11, an imaging section 12, a driving mechanism section 13, an imaging visual field control section 14, an image processing section 15, a storage section 16, a timer 17, a first wireless communication section 18, a second wireless communication section 19, and a directivity control section 20. The control section 11 controls the operations of different sections of a main body.

The imaging section 12 outputs about 30 frames of frame images per second which are taken by imaging an area in an imaging visual field (i.e., imaging area). The imaging section 12 is mounted on a camera platform (not shown) which is rotatable in the pan direction and in the tilt direction separately. The pan direction and the tilt direction are perpendicular to each other. The imaging section 12 has an optical system driving portion (not shown) for driving an imaging optical system and is capable of changing an imaging magnification Zoom.

The driving mechanism section 13 has a driving source, such as a motor, for rotating the camera platform mounted with the imaging section 12 thereon in the pan direction and in the tilt direction. The driving mechanism section 13 also has a sensor for detecting an angle of rotation $\theta$ of the camera platform in the pan direction and an angle of rotation $\phi$ of the camera platform in the tilt direction.

The imaging visual field control section 14 instructs the imaging section 12 on the imaging magnification Zoom. According to this instruction, the imaging section 12 changes the imaging magnification Zoom. The imaging visual field control section 14 also instructs the driving mechanism section 13 on the angle of rotation $\theta$ of the camera platform in the pan direction and the angle of rotation $\phi$ of the camera platform in the tilt direction. According to this instruction, the driving mechanism section 13 changes the angle of rotation $\theta$ of the camera platform mounted with the imaging section 12 in the pan direction and the angle of rotation $\phi$ of the camera platform in the tilt direction.

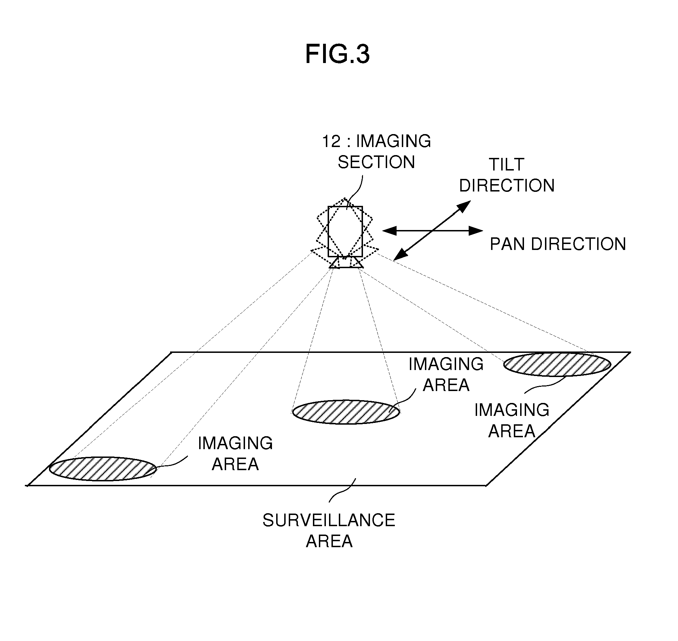

The imaging visual field of the imaging section 12 changes with changes in the angle of rotation $\theta$ of the camera platform in the pan direction, the angle of rotation $\phi$ of the camera platform in the tilt direction and the imaging magnification Zoom. A surveillance area is predetermined for the surveillance camera terminal 1 as shown in FIG. 3. The surveillance area is a region which can be imaged by the imaging section 12 changing its imaging visual field.

The image processing section 15 processes the frame images taken by the imaging section 12 to extract a person being imaged and gives an ID to the person thus extracted. The "ID" is a unique value which can identify a person. The image processing section 15 receives outputs of the sensor which detects the angle of rotation $\theta$ of the camera platform mounted with the imaging section 12 thereon in the pan direction and the angle of rotation $\phi$ of the camera platform in the tilt direction. That is, the image processing section 15 acquires from the outputs of the sensor the angle of rotation $\theta$ of the camera platform mounted with the imaging section 12 thereon in the pan direction and the angle of rotation $\phi$ of the camera platform in the tilt direction. The image processing section 15 also acquires the imaging magnification Zoom of the imaging section 12 from a signal indicative of the imaging magnification Zoom inputted from the imaging section 12. The image processing section 15 can acquire the imaging visual field of the imaging section 12, that is, the position of the imaging area in the surveillance area from the angle of rotation $\theta$ of the camera platform in the pan direction, the angle of rotation $\phi$ of the camera platform in the tilt direction and the imaging magnification Zoom. Therefore, the image processing section 15 can convert the position of a person in each frame image taken by the imaging section 12 to a position in the surveillance area. The image processing section 15 instructs the imaging visual field control section 14 on the imaging visual field of the imaging section 12 in accordance with travel of a person being tracked.

The image processing section 15 is configured to extract a person being imaged and track this person by utilizing a spatio-temporal MRF (Markov Random Field) model for example. As is known, the spatio-temporal MRF model is a spatio-temporal model expanded from an MRF model with attention focused on the correlation between spatio-temporal images in the temporal axis direction. The spatio-temporal MRF model is a model which defines the correlation in the temporal axis direction by dividing the area of each frame image to be subjected to processing into blocks each having several pixels X several pixels (e.g., 8 pixels X 8 pixels) and referencing a displacement vector throughout temporally successive frame images on a block-by-block basis.

The storage section 16 stores therein an operation program for causing the main body to operate, settings data to be utilized during operation, processing data that occurs during operation, and the like. The timer 17 clocks current time.

The first wireless communication section 18 is connected to a non-directional antenna 18a and controls wireless communication with another surveillance camera terminal 1.

The second wireless communication section 19 is connected to a directional antenna 20a via the directivity control section 20. The directivity control section 20 changes the orientation of directivity of the directional antenna 20a. The second wireless communication section 19 also controls wireless communication with another surveillance camera terminal 1.

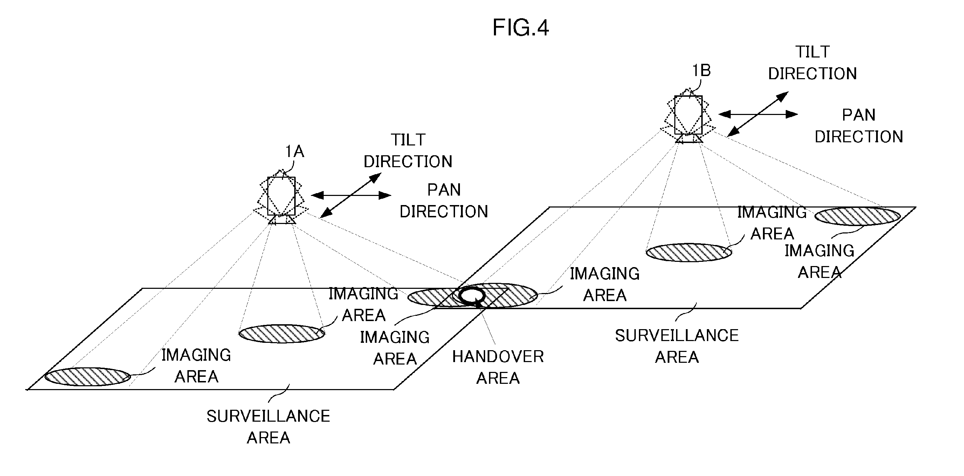

The present wide-area surveillance system is a system configured to track a person, such as a suspicious individual having showed unusual behavior or a like person (hereinafter will be simply referred to as "suspicious individual"). Each surveillance camera terminal 1 is assigned a surveillance area as described above. As shown in FIG. 4, the surveillance areas of two adjacent surveillance camera terminals 1A and 1B overlap each other partially. Though FIG. 4 illustratively shows the surveillance areas of the two adjacent surveillance camera terminals 1A and 1B, the surveillance areas of another pair of adjacent surveillance camera terminals 1 also overlap each other partially. The overlapped area is a handover area for handing over the suspicious individual from one surveillance camera terminal 1A (or 1B) to the other surveillance camera terminal 1B (or 1A). The handover area is an area for the surveillance camera terminal 1B to identify the suspicious individual therein and take over the tracking of suspicious individual from the surveillance camera terminal 1A when, for example, the suspicious individual being tracked by the surveillance camera terminal 1A enters the surveillance area of the surveillance camera terminal 1B by passing through the handover area.

For every adjacent surveillance camera terminal 1, the surveillance camera terminal 1 has stored in its storage section 16 the imaging visual field of the imaging section 12 (defined by the angle of rotation $\theta$ in the pan direction, the angle of rotation $\phi$ in the tilt direction, and the imaging magnification Zoom) which is for use in handover of the suspicious individual to the adjacent surveillance camera terminal 1 of concern. The imaging visual field of the imaging section 12 for use in handover of the suspicious individual is inclusive of the handover area for handing over the suspicious individual to a counterpart surveillance camera terminal 1.

For every adjacent surveillance camera terminal 1, each surveillance camera terminal 1 has also stored in its storage section 16 coordinate transformation information indicative of the relative positional relationship between a two-dimensional coordinate system of each frame image taken by imaging the handover area by the imaging section 12 of the subject surveillance camera terminal 1 and a two-dimensional coordinate system of each frame image taken by imaging the handover area by the imaging section 12 of an adjacent counterpart surveillance camera terminal 1. The coordinate transformation information is information for projective transformation of the two-dimensional coordinate system of each frame image taken by the imaging section 12 of the subject surveillance camera terminal 1 with an imaging visual field for use in handover of the suspicious individual and the two-dimensional coordinate system of each frame image taken by the imaging section 12 of the adjacent counterpart surveillance camera terminal 1 with an imaging visual field for use in handover of the suspicious individual into a common coordinate system. In the present embodiment, the coordinate transformation information stored in the storage section 16 includes first and second coordinate transformation parameters to be described below. The first coordinate transformation parameter is a parameter for projective transformation of the two-dimensional coordinate system of each frame image taken by the imaging section 12 of the subject surveillance camera terminal 1 with the imaging visual field for use in handover of the suspicious individual into the two-dimensional coordinate system of each frame image taken by the imaging section 12 of the adjacent counterpart surveillance camera terminal 1 with the imaging visual field for use in handover of the suspicious individual. The second coordinate transformation parameter is a parameter for projective transformation of the two-dimensional coordinate system of each frame image taken by the imaging section 12 of the adjacent counterpart surveillance camera terminal 1 with the imaging visual field for use in handover of the suspicious individual into the two-dimensional coordinate system of each frame image taken by the imaging section 12 of the subject surveillance camera terminal 1 with the imaging visual field for use in handover of the suspicious individual.

The coordinate transformation information may include only one of the first and second coordinate transformation parameters.

Here, description is directed to the first and second coordinate transformation parameters. The first and second coordinatetransformation parameters are values calculated using frame images actually taken at the time of installation of the surveillance camera terminals 1.

Initially, upon completion of installation of the surveillance camera terminal 1, four points on the floor surface in the handover area shared with an adjacent counterpart surveillance camera terminal 1 are marked using a tape or the like. Then, a frame image taken by the imaging section 12 of the subject terminal with the imaging visual field for use in handover of the suspicious individual is processed to detect coordinates (x, y) of the position of each of the marked four points on the frame image. Similarly, the coordinates (X, Y) of the position of each of the marked four points on a frame image taken by the imaging section 12 of the adjacent counterpart terminal 1 with the imaging visual field for use in handover of the suspicious individual are acquired from the counterpart terminal. The coordinates of the position of each of the marked points are substituted into the following equations:

$$X = (a1x+b1y+c1)/(a0x+b0y+1)$$

$$Y = (a2x+b2y+c2)/(a0x+b0y+1),$$

to obtain simultaneous equations with eight unknowns. Eight constants: a0, b0, a1, b1, c1, a2, b2 and c2, which constitute the solution to the simultaneous equations with eight unknowns, form the first coordinate transformation parameter associated with the adjacent counterpart surveillance camera terminal 1. The surveillance camera terminal 1 stores the first coordinate transformation parameter in its storage section 16.

Likewise, the coordinates of the position of each of the markedpoints are substituted into the following equations :

$$x = (A1X+B1Y+C1)/(A0X+B0Y+1)$$

$$Y = (A2X+B2Y+C2)/(A0X+B0Y+1),$$

to obtain simultaneous equations with eight unknowns. Eight constants: A0, B0, A1, B1, C1, A2, B2 and C2, which constitute the solution to the simultaneous equations with eight unknowns form the second coordinate transformation parameter associated with the adjacent counterpart surveillance camera terminal 1. The surveillance camera terminal 1 stores the second coordinate transformation parameter in its storage section 16.

In identifying a person positioned in the handover area, for each of persons imaged in the handover area of a frame image taken by the subject terminal, the coordinates of his or her position on the frame image are obtained. For each of persons imaged in the handover area of a frame image taken by the counterpart terminal, the coordinates of his or her position on the frame image are acquired from the counterpart terminal. Further, combination patterns are prepared for combining the persons positioned in the handover area imaged by the subject terminal with the persons positioned in the handover area imaged by the counterpart terminal in a one-to-one correspondence. For example, when two persons are positioned in the handover area, the number of such combination patterns prepared here is two. When three persons are positioned in the handover area, the number of such combination patterns prepared here is six.

For each of the persons positioned in the handover area imaged by the subject surveillance camera terminal 1, the subject terminal 1 transforms the coordinates of the position of the person of concern into the coordinate system of the counterpart terminal by using the first coordinate transformation parameter. For each of the person combination patterns, the surveillance camera terminal 1 calculates a first distance energy which is the sum total of distances between the corresponding persons in the coordinate system of the counterpart terminal. For each of the persons positioned in the handover area imaged by the counterpart terminal, the subject surveillance camera terminal 1 transforms the coordinates of the position of the person of concern into the coordinate system of the subject terminal by using the second coordinate transformation parameter. For each of the person combination patterns, the subject surveillance camera terminal 1 calculates a second distance energy which is the sum total of distances between the corresponding persons in the coordinate system of the subject terminal.

Subsequently, the surveillance camera terminal 1 determines that a combination pattern such that the sum of the first distance energy and the second distance energy is the smallest of all the combinations of the persons positioned in the handover area is a proper correspondence between the persons positioned in the handover area. Therefore, when the suspicious individual is positioned in the handover area, the surveillance camera terminal 1 which takes over the tracking of the suspicious individual can acquire information on which one of the persons positioned in the handover area the suspicious individual is from the surveillance camera terminal 1 tracking the suspicious individual, thereby identifying the suspicious individual.

In identifying the suspicious individual positioned in the handover area, it is possible that the surveillance camera terminal 1 tracking the suspicious individual gives a notification of template information used for detecting the suspicious individual to the surveillance camera terminal 1 which has to take over the tracking of the suspicious individual, while the surveillance camera terminal 1 which has to take over the tracking of the suspicious individual identifies the suspicious individual by using the template information thus given. The surveillance camera terminal 1 which has to take over the tracking of the suspicious individual may be notified of, in addition to the template information described above, characteristics information used for detecting the suspicious individual (including, for example, information that can specify the suspicious individual by image data on the suspicious individual cut out of the image or by the shape, color, size and the like of the suspicious individual, information on the shapes or positions of face parts including eyes, nose and mouth, or like information).

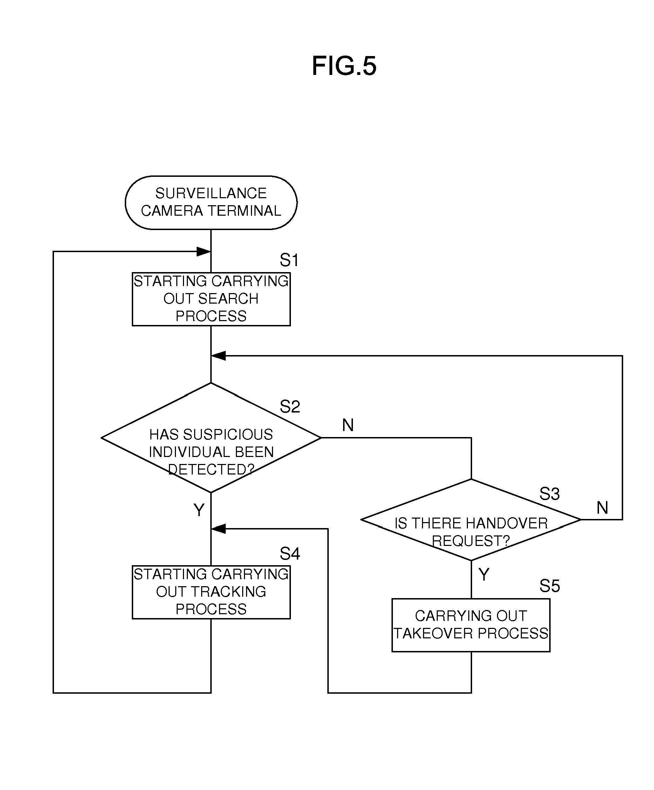

The following description is directed to the operation of the surveillance camera terminal 1. FIG. 5 is a flowchart of an operation of the surveillance camera terminal 1. The surveillance camera terminal 1 starts carrying out a search process for searching the surveillance area for the suspicious individual (step S1). At that time, the surveillance camera terminal 1 does not yet track the suspicious individual (which means that the terminal 1 does not yet carry out a tracking process to be described later). The surveillance camera terminal 1 waits until detection of the suspicious individual by the search process started in step S1 (step S2) or until receipt of a request of handover of the suspicious individual from an adjacent surveillance camera terminal 1 (step S3).

In the search process started in step S1, the imaging visual field of the imaging section 12 is changed at fixed time intervals (several seconds). Specifically, the imaging visual field control section 14 instructs the driving mechanism section 13 on an angle of rotation $\theta$ of the camera platform mounted with the imaging section 12 thereon in the pan direction and an angle of rotation $\phi$ of the camera platform in the tilt direction at fixed time intervals based on predetermined conditions. For example, these conditions are predetermined so that the imaging visual field of the imaging section 12 scans over the entire surveillance area. The imaging magnification used is a predetermined imaging magnification.

The image processing section 15 processes a frame image taken by the imaging section 12 to extract persons imaged and gives an ID to each of the persons thus extracted. At that time, any ID is not given to a person already given an ID. For each of the persons extracted, the image processing section 15 prepares an object map which makes his or her ID correspond with his or her position in the surveillance area. The object map is given a time stamp indicative of the time at which the timer 17 clocked at the time of preparation of the object map. The image processing section 15 uses temporally successive object maps to analyze the behavior of each of the persons given respective IDs. I f there is a person showing unusual behavior (i.e., a person showing a predetermined pattern of behavior), that person is detected as a suspicious individual. Alternatively, it is possible that with the facial image of a marked person having been registered, the marked person is detected by collating the facial image of a person taken by the imaging section 12 with the facial image of the marked person and is then determined as a suspicious individual.

In step S3, the surveillance camera terminal 1 waits until the first wireless communication section 18 receives a handover request from another surveillance camera terminal 1 to the subject terminal 1. Since the first wireless communication section 18 is connected to the non-directional antenna 18a, the first wireless communication section 18 sometimes receives a handover request addressed to another terminal. When the first wireless communication section 18 receives such a handover request addressed to another terminal, the subject terminal 1 functions as a relay node. Specifically, the forwarding destination of the handover request addressed to another terminal that has been received this time is determined from all the terminals (including the terminal having received the request) except the terminal having transmitted the request and then the request is transmitted to the terminal thus determined. For example, a handover request transmitted by the surveillance camera terminal 1A shown in FIG. 1 to the surveillance camera terminal 1B may be transmitted by a route passing through the surveillance camera terminals 1A→1F→1C→1B or a route passing through the surveillance camera terminals 1A→1G→1B. In such a case, the surveillance camera terminals 1F, 1C and 1G function as relay nodes.

Upon detection of the suspicious individual, the surveillance camera terminal 1 starts carrying out the tracking process (step S4). When the surveillance camera terminal 1 receives a handover request addressed thereto, the terminal 1 carries out a takeover process (step S5).

In the following description, the surveillance camera terminal 1 which carries out the tracking process in step S4 will be referred to as the "handover surveillance camera terminal 1", while the surveillance camera terminal 1 which carries out the takeover process in step S5 will be referred to as the "takeover surveillance camera terminal 1".

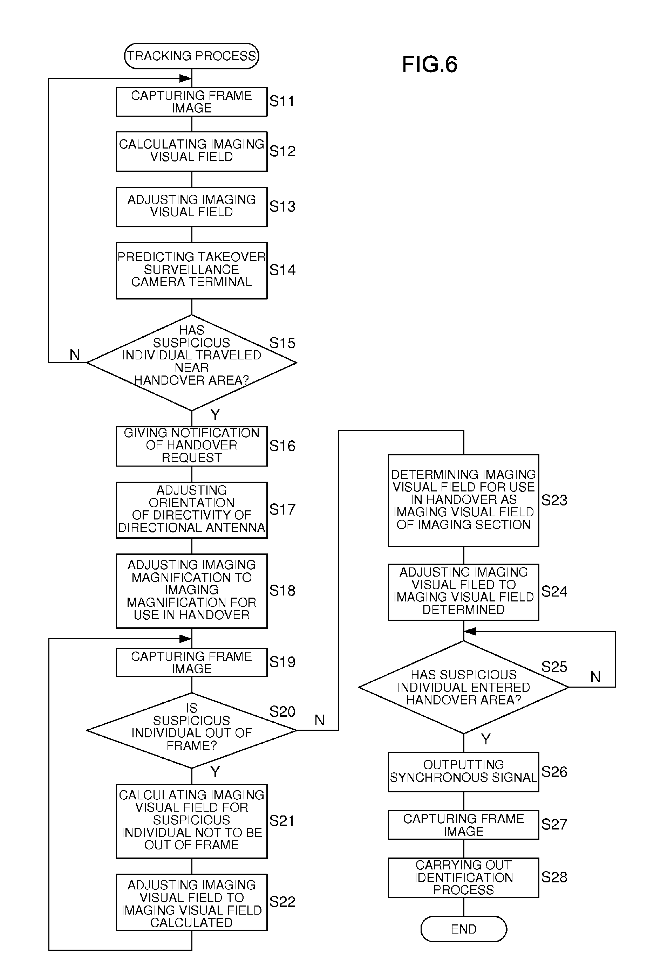

Description is first directed to the tracking process in step S4. FIG. 6 is a flowchart of the tracking process. The image processing section 15 of the handover surveillance camera terminal 1 captures a frame image taken by the imaging section 12 (step S11), processes the frame image, and calculates an imaging visual field (i.e., an angle of rotation $\theta$ of the camera platform in the pan direction and an angle of rotation $\phi$ of the camera platform in the tilt direction) with which the suspicious individual is centered in the imaging section 12 (step S12). At that time, the imaging magnification Zoom of the imaging section 12 is a predetermined imaging magnification. At the time the suspicious individual is detected, the suspicious individual has been given an ID.

The handover surveillance camera terminal 1 adjusts the imaging visual field of the imaging section 12 to that calculated in step S12 (step S13). That is, the angle of rotation $\theta$ of the camera platform in the pan direction and the angle of rotation $\phi$ of the camera platform in the tilt direction are adjusted to the respective angles calculated in step S12. Specifically, the image processing section 15 notifies the imaging visual field control section 14 of the angle of rotation $\theta$ of the camera platform in the pan direction and the angle of rotation $\phi$ of the camera platform in the tilt direction which have been calculated thereby. The imaging visual field control section 14 causes the driving mechanism section 13 to adjust the angle of rotation $\theta$ of the camera platform in the pan direction and the angle of rotation $\phi$ of the camera platform in the tilt direction based on the notification.

The handover surveillance camera terminal 1 predicts another surveillance camera terminal 1 adjacent thereto which will take over the tracking of the suspicious individual (i.e., the takeover surveillance camera terminal 1) (step S14). The handover surveillance camera terminal 1 determines whether or not the suspicious individual being tracked is positioned near the handover area shared with the adjacent takeover surveillance camera terminal 1 predicted in step S14 (step S15). If it is not determined by the handover surveillance camera terminal 1 that the suspicious individual being tracked is positioned near the handover area shared with the takeover surveillance camera terminal 1 predicted in step S14, the handover surveillance camera terminal 1 returns the process to step S11 to repeat the operations described above.

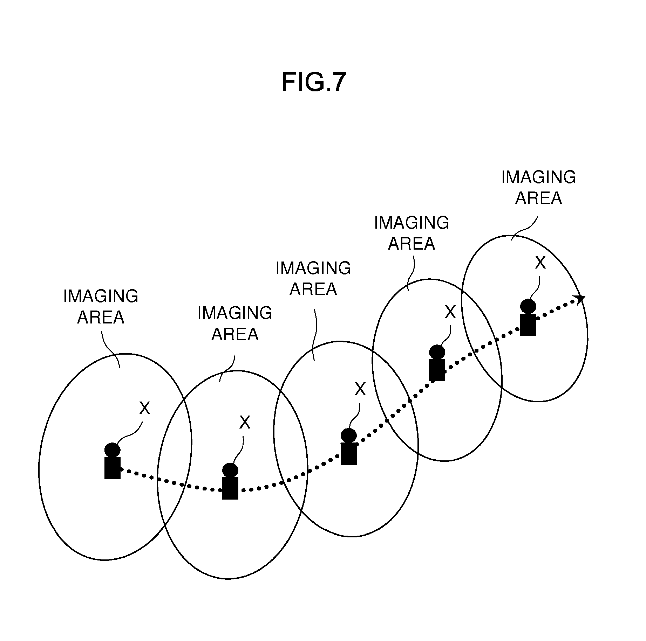

By repeating the operations of steps S11 to S15, the handover surveillance camera terminal 1 can track the suspicious individual X while making the suspicious individual X substantially centered in the imaging visual field of the imaging section 12 as shown in fig. 7. Even during the tracking process, the image processing section 15 prepares an object map which makes the ID of the suspicious individual correspond with the position of the suspicious individual in the surveillance area. The use of the object map allows a displacement vector defined by the direction and speed of travel of the suspicious individual to be obtained. The handover surveillance camera terminal 1 predicts the takeover surveillance camera 1 which will take over the tracking of the suspicious individual being tracked in step S14 by using the displacement vector thus obtained.

The determination in step S15 can be simply made by determining whether or not the distance between the position of the suspicious individual and the handover area (for example, the center or boundary of the handover area) is equal to or less than a predetermined threshold value of distance from the handover area shared with the takeover surveillance camera terminal 1. Alternatively, the determination may be made in such a manner that with the speed of travel of the suspicious individual taken into consideration, whether or not the suspicious individual is positioned near the handover area is determined according to whether or not the time required for the suspicious individual being tracked to reach the handover area shared with the takeover surveillance camera terminal 1 is equal to or shorter than a predetermined time period (for example two to three seconds).

If it is determined by the handover surveillance camera terminal 1 that the suspicious individual being tracked in step S15 is positioned near the handover area shared with the takeover surveillance camera terminal 1 predicted in step S 14, the handover surveillance camera terminal 1 transmits a handover request to the takeover surveillance camera terminal 1 (step S16). The handover request in step S16 is transmitted from the first wireless communication section 18. Therefore, the handover request is not necessarily directly received by the takeover surveillance camera terminal 1. This means that the handover request may be received by the takeover surveillance camera terminal 1 through a wireless communication path via another surveillance camera terminal 1. The takeover surveillance camera terminal 1 having received the handover request addressed thereto carries out the takeover process in step S5.

After the handover surveillance camera terminal 1 has made the request for handover of the suspicious individual in step S16, the directivity control section 20 adjusts the orientation of directivity of the directional antenna 20a to an orientation suited for direct communication with the takeover surveillance camera terminal 1 having received the handover request transmitted this time (step S17). The directivity control section 20 has stored therein the orientation of directivity of the directional antenna 20a suited for direct communication with each of the surveillance camera terminals 1 located adjacent to the handover surveillance camera terminal 1.

The handover surveillance camera terminal 1 adjusts the imaging magnification Zoom to an imaging magnification for use in handover (step S18). The image processing section 15 captures and processes a frame image taken by the imaging section 12 (step S19) and determines whether or not the suspicious individual is out of the frame when the imaging visual field of the imaging section 12 is adjusted to an imaging visual field for use in handover (step S20).

If it is determined by the handover surveillance camera terminal 1 that the suspicious individual is out of the frame in step S20, the handover surveillance camera terminal 1 calculates an imaging visual field (i.e., an angle of rotation $\theta$ of the camera platform in the pan direction and an angle of rotation $\phi$ of the camera platform in the tilt direction) which can position the suspicious individual therein (step 21). Though the imaging visual field which centers the suspicious individual therein may be calculated in step S21, an imaging visual field close to the imaging visual field for use in handover in which the suspicious individual is shifted from the center is preferably calculated. The handover surveillance camera terminal 1 adjusts the imaging visual field of the imaging section 12 to that calculated in step S21 (step S22) and then returns the process to step 17.

If it is not determined by the handover surveillance camera terminal 1 that the suspicious individual is out of the frame in step S20, the imaging visual field for use in handover which is stored in the storage section 16 is determined as the imaging visual field of the imaging section 12 (step S23). The handover surveillance camera terminal 1 adjusts the imaging visual field of the imaging section 12 to the imaging visual field for use in handover (step S24).

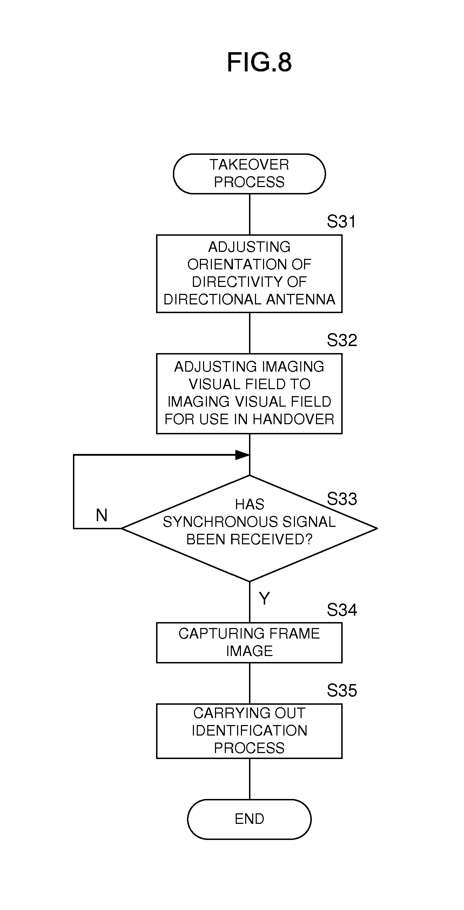

The takeover surveillance camera terminal 1 having received the suspicious individual handover request made by the handover surveillance camera terminal 1 in step S16 has started carrying out the takeover process shown in FIG. 8. The directivity control section 20 of the takeover surveillance camera terminal 1 adjusts the orientation of directivity of the directional antenna 20a to an orientation suited for direct communication with the handover surveillance camera terminal 1 (step S31). The takeover surveillance camera terminal 1 also adjusts the imaging visual field of the imaging section 12 to an imaging visual field for use in handover of the suspicious individual from the handover surveillance camera terminal 1 (step S32) and then waits for a synchronous signal from the handover surveillance camera terminal 1 (step S33).

Therefore, at the time when the handover surveillance camera terminal 1 adjusts the imaging visual field of the imaging section 12 to the imaging visual field for use in handover of the suspicious individual to the takeover surveillance camera terminal 1 in step S24, the second wireless communication section 19 is ready for direct communication. At that time, the takeover surveillance camera terminal 1 has adjusted the imaging visual field of the imaging section 12 to the imaging visual field for use in handover of the suspicious individual from the handover surveillance camera terminal 1.

From then on until completion of the handover of the tracking of the suspicious individual, the handover surveillance camera terminal 1 and the takeover surveillance camera terminal 1 communicate directly with each other by their respective second wireless communication sections 19.

After the handover surveillance camera terminal 1 has adjusted the imaging visual field of the imaging section 12 to the imaging visual field for use in handover of the suspicious individual to the takeover surveillance camera terminal 1 in step S24, the handover surveillance camera terminal 1 waits for the suspicious individual to enter the handover area (step S25) . Upon entry of the suspicious individual into the handover area, the handover surveillance camera terminal 1 transmits the synchronous signal to the takeover surveillance camera terminal 1 (step S26). The synchronous signal may be a signal for notification of a time or notification of simple reference timing. The synchronous signal is transmitted by the second wireless communication section 19 to the takeover surveillance camera terminal 1.

The handover surveillance camera terminal 1 and the takeover surveillance camera terminal 1 capture frame images taken by their respective imaging sections 12 with timing based on the synchronous signal (steps S27 and S34). The takeover surveillance camera terminal 1 cooperates with the handover surveillance camera terminal 1 to identify the suspicious individual based on the images taken by imaging the handover area (steps S28 and S35). The identification of the suspicious individual can be simply made by the technique using the aforementioned first and second distance energies. At that time, the handover surveillance camera terminal 1 communicates directly with the takeover surveillance camera terminal 1 by the second wireless communication section 19 to notify the takeover surveillance camera terminal 1 of the result of processing of the frame images taken by the handover surveillance camera terminal 1 in step S27 (i.e., the position of each of persons positioned in the handover area (on each frame image) including the suspicious individual being tracked).

Thus, it is possible to limit a delay in communication between the handover surveillance camera terminal 1 and the takeover surveillance camera terminal 1, thereby to identify the suspicious individual by cooperation between the handover surveillance camera terminal 1 and the takeover surveillance camera terminal 1 during the presence of the suspicious individual in the handover area. This makes it possible to track the suspicious individual in real time. Further, it is possible to give a watchman or the like a proper instruction with respect to the suspicious individual, thereby to catch the suspicious individual without allowing the suspicious individual to slip.

After the takeover process in step S5 has been completed, the takeover surveillance camera terminal 1 starts carrying out the aforementioned tracking process in step S4. That is, the takeover surveillance camera terminal 1 tracks the suspicious individual taken over this time. The handover surveillance camera terminal 1, on the other hand, returns the process to step S1 after the tracking process in step S4 has been completed.

In the embodiment described above, each surveillance camera terminal 1 is capable of changing its imaging visual field. However, each surveillance camera terminal 1 may have a fixed imaging visual field. In this case, the area imaged in such a fixed imaging visual field is the surveillance area.

In the embodiment described above, the second wireless communication section 19 uses the directional antenna 20a to perform direct wireless communication between the handover surveillance camera terminal 1 and the takeover surveillance camera terminal 1. However, the second wireless communication section 19, directivity control section 20 and directional antenna 20a may be eliminated so long as the environment can ensure a sufficient received signal strength even in direct communication by the first wireless communication section 18 using the non-directional antenna 18a.

In the embodiment described above, the object to be tracked is a suspicious individual. The object to be tracked is not limited to a human, but may be any other type of mobile object such as a vehicle.

Reference Signs List

1(1A to 1H)     surveillance camera terminal
11              control section
12              imaging section
13              driving mechanism section
14              imaging visual field control section
15              image processing section
16              storage section
17              timer
18              first wireless communication section
18a             non-directional antenna
19              second wireless communication section
20              directivity control section
20a             directional antenna

**Claims**

**1.** A surveillance camera terminal comprising:

wireless communication means configured to perform wireless communication with another terminal located near the subject terminal either directly or via yet another terminal; imaging means configured to image a surveillance area assigned to the subject terminal; object extracting means configured to extract an object being imaged by processing a frame image taken by the imaging means; tracking means configured to track the object extracted by the object extracting means in the surveillance area; handover means configured to perform wireless communication with a counterpart terminal assigned a surveillance area partially overlapping the surveillance area of the subject terminal by the wireless communication means to hand over the object being tracked by the tracking means to the counterpart terminal in a handover area in which the surveillance areas of the respective terminals overlap each other; and wireless communication path forming means configured to form a wireless communication path through which the wireless communication means communicates directly with the counterpart terminal to which the object is handed over when the handover means hands over the object.

2. The surveillance camera terminal according to claim 1, wherein the wireless communication means includes a first wireless communication section having a non-directional antenna and a second wireless communication section having a directional antenna; wherein the wireless communication path forming means causes the first wireless communication section to transmit a handover request to the counterpart terminal to which the handover means hands over the object and adjusts an orientation of directivity of the directional antenna to an orientation suited for direct communication with the counterpart terminal; and wherein the handover means communicates directly with the counterpart terminal by the second wireless communication section.

3. The surveillance camera terminal according to claim 1 or 2, wherein the handover means causes the counterpart terminal to identify the object being tracked by the tracking means with use of frame images of the handover area taken by the subject terminal and the counterpart terminal.

4. The surveillance camera terminal according to any one of claims 1 to 3, which is provided with prediction means configured to predict the counterpart terminal to which the handover means has to hand over the object based on a traveling route of the object being tracked in the surveillance area by the tracking means, wherein the wireless communicationpath formingmeans forms a wireless communication path for direct communication with the counterpart terminal predicted by the prediction means.

5. The surveillance camera terminal according to any one of claims 1 to 4, which is provided with imaging visual field control means configured to change an imaging visual field of the imaging means in accordance with a position of the object being tracked in the surveillance area by the tracking means.

### Amended claims under Art. 19.1 PCT

1. A surveillance camera terminal comprising:

wireless communication means configured to perform wireless communication with another terminal located near the subject terminal either directly or via yet another terminal; imaging means configured to image part of a surveillance area assigned to the subject terminal with an imaging visual field positioning the part of the surveillance area therein; imaging visual field control means configured to adjust the imaging visual field of the imaging means to a desired region in the surveillance area of the subject terminal; object extracting means configured to extract an object being imaged by processing a frame image taken by the imaging means; tracking means configured to track the object extracted by the object extracting means in the surveillance area; handover means configured to hand over the object being tracked by the tracking means to each of counterpart terminals which are assigned respective surveillance areas each partially overlapping the surveillance area of the subject terminal, in a handover area in which the surveillance area assigned to the counterpart terminal of concern overlaps the surveillance area of the subject terminal; and wireless communication path forming means configured to form a wireless communication path through which the wireless communication means communicates directly with the counterpart terminal to which the object is handed over when the handover means hands over the object.

2. The surveillance camera terminal according to claim 1, wherein the wireless communication means includes a first wireless communication section having a non-directional antenna and a second wireless communication section having a directional antenna; wherein the wireless communication path forming means causes the first wireless communication section to transmit a handover request to the counterpart terminal to which the handover means hands over the object and adjusts an orientation of directivity of the directional antenna to an orientation suited for direct communication with the counterpart terminal; and

wherein the handover means communicates directly with the counterpart terminal by the second wireless communication section.

**3.** The surveillance camera terminal according to claim 1 or 2, wherein the handover means causes the counterpart terminal to identify the object being tracked by the tracking means with use of frame images of the handover area taken by the subject terminal and the counterpart terminal.

**4.** The surveillance camera terminal according to any one of claims 1 to 3, which is provided with prediction means configured to predict the counterpart terminal to which the handover means has to hand over the object based on a traveling route of the object being tracked in the surveillance area by the tracking means,

wherein the wireless communicationpath formingmeans forms a wireless communication path for direct communication with the counterpart terminal predicted by the prediction means.

**5.** The surveillance camera terminal according to any one of claims 1 to 4, wherein the imaging visual field control means changes the imaging visual field of the imaging means in accordance with a position of the object being tracked in the surveillance area by the tracking means.

# FIG.1

# FIG.2

1 : SURVEILLANCE CAMERA
TERMINAL

# FIG.3

12 : IMAGING
SECTION

TILT
DIRECTION

PAN DIRECTION

IMAGING
AREA

IMAGING
AREA

IMAGING
AREA

SURVEILLANCE
AREA

# FIG.4

EP 2 549 752 A1

# FIG.5

```
        ╭─────────────────╮
        │   SURVEILLANCE   │
        │ CAMERA TERMINAL  │
        ╰─────────────────╯
                 │
                 ▼                    S1
        ┌─────────────────┐
        │STARTING CARRYING│
        │   OUT SEARCH    │
        │     PROCESS     │
        └─────────────────┘
                 │
                 ▼
                ╱ ╲              S2
              ╱     ╲                        N
            ╱  HAS    ╲ ──────────────────────────┐
          ╱ SUSPICIOUS ╲                           │
          ╲ INDIVIDUAL ╱                           │
            ╲ DETECTED?╱                           │
              ╲     ╱                  S3          │
                ╲ ╱               ╱ ╲          N   │
               Y │              ╱     ╲ ─────────┐ │
                 │            ╱IS THERE ╲         │ │
                 ◄──────────╲ HANDOVER ╱         │ │
                 │           ╲ REQUEST?╱         │ │
                 ▼            ╲     ╱             │ │
        ┌─────────────────┐    ╲ ╱              │ │
        │STARTING CARRYING│   Y │     S5        │ │
        │  OUT TRACKING   │     ▼               │ │
        │     PROCESS     │  ┌─────────────────┐│ │
        └─────────────────┘  │  CARRYING OUT   ││ │
                 │           │TAKEOVER PROCESS ││ │
                 │           └─────────────────┘│ │
                 │                    │          │ │
                 └────────────────────┘──────────┘─┘
```

FIG.6

```
      ( TRACKING PROCESS )
              │
              ▼
      ┌──────────────────┐
      │ CAPTURING FRAME  │ S11
      │      IMAGE       │
      └──────────────────┘
              │
              ▼
      ┌──────────────────┐
      │ CALCULATING      │ S12
      │ IMAGING          │
      │ VISUAL FIELD     │
      └──────────────────┘
              │
              ▼
      ┌──────────────────┐
      │ ADJUSTING        │ S13
      │ IMAGING          │
      │ VISUAL FIELD     │
      └──────────────────┘
              │
              ▼
      ┌──────────────────┐
      │ PREDICTING       │ S14
      │ TAKEOVER         │
      │ SURVEILLANCE     │
      │ CAMERA TERMINAL  │
      └──────────────────┘
              │
              ▼
           ╱ HAS ╲
          ╱ SUSPICIOUS ╲   S15
    N ───╱ INDIVIDUAL TRAVELED ╲
         ╲   NEAR   ╱
          ╲ HANDOVER AREA? ╱
              │ Y
              ▼
      ┌──────────────────┐
      │ GIVING           │ S16
      │ NOTIFICATION     │
      │ OF HANDOVER      │
      │ REQUEST          │
      └──────────────────┘
              │
              ▼
      ┌──────────────────┐
      │ ADJUSTING        │ S17
      │ ORIENTATION      │
      │ OF DIRECTIVITY OF│
      │ DIRECTIONAL      │
      │ ANTENNA          │
      └──────────────────┘
              │
              ▼
      ┌──────────────────┐
      │ ADJUSTING        │ S18
      │ IMAGING          │
      │ MAGNIFICATION TO │
      │ IMAGING          │
      │ MAGNIFICATION    │
      │ FOR USE IN       │
      │ HANDOVER         │
      └──────────────────┘
              │
              ▼
      ┌──────────────────┐
      │ CAPTURING FRAME  │ S19
      │      IMAGE       │
      └──────────────────┘
              │
              ▼
           ╱ IS ╲
          ╱ SUSPICIOUS ╲   S20
         ╱ INDIVIDUAL OUT OF ╲─── N
          ╲   FRAME?   ╱
              │ Y
              ▼
      ┌──────────────────┐
      │ CALCULATING      │ S21
      │ IMAGING          │
      │ VISUAL FIELD FOR │
      │ SUSPICIOUS       │
      │ INDIVIDUAL NOT TO│
      │ BE OUT OF FRAME  │
      └──────────────────┘
              │
              ▼
      ┌──────────────────┐
      │ ADJUSTING        │ S22
      │ IMAGING          │
      │ VISUAL FIELD TO  │
      │ IMAGING VISUAL   │
      │ FIELD CALCULATED │
      └──────────────────┘
```

```
      ┌──────────────────┐
      │ DETERMINING      │ S23
      │ IMAGING          │
      │ VISUAL FIELD FOR │
      │ USE IN HANDOVER  │
      │ AS IMAGING       │
      │ VISUAL FIELD     │
      │ OF IMAGING       │
      │ SECTION          │
      └──────────────────┘
              │
              ▼
      ┌──────────────────┐
      │ ADJUSTING        │ S24
      │ IMAGING          │
      │ VISUAL FILED TO  │
      │ IMAGING VISUAL   │
      │ FIELD DETERMINED │
      └──────────────────┘
              │
              ▼
           ╱ HAS ╲   S25
          ╱ SUSPICIOUS ╲─── N
         ╱ INDIVIDUAL ENTERED ╲
          ╲ HANDOVER AREA? ╱
              │ Y
              ▼
      ┌──────────────────┐
      │ OUTPUTTING       │ S26
      │ SYNCHRONOUS      │
      │ SIGNAL           │
      └──────────────────┘
              │
              ▼
      ┌──────────────────┐
      │ CAPTURING FRAME  │ S27
      │      IMAGE       │
      └──────────────────┘
              │
              ▼
      ┌──────────────────┐
      │ CARRYING OUT     │ S28
      │ IDENTIFICATION   │
      │ PROCESS          │
      └──────────────────┘
              │
              ▼
           ( END )
```

# FIG.7

# FIG.8

```
         ┌─────────────────┐
         │    TAKEOVER      │
         │    PROCESS       │
         └────────┬────────┘
                  │                    S31
         ┌────────┴────────┐
         │    ADJUSTING     │
         │   ORIENTATION OF │
         │   DIRECTIVITY OF │
         │ DIRECTIONAL ANTENNA│
         └────────┬────────┘
                  │                    S32
         ┌────────┴────────┐
         │ ADJUSTING IMAGING│
         │  VISUAL FIELD TO │
         │ IMAGING VISUAL FIELD│
         │ FOR USE IN HANDOVER│
         └────────┬────────┘
                  │
                  ▼                    S33
              ◇─────────◇
         N   ╱    HAS    ╲
    ┌───────   SYNCHRONOUS SIGNAL
    │        ╲ BEEN RECEIVED? ╱
    │          ◇─────────◇
    │              │ Y
    │              │                   S34
    │     ┌────────┴────────┐
    │     │ CAPTURING FRAME  │
    │     │     IMAGE        │
    │     └────────┬────────┘
    │              │                   S35
    │     ┌────────┴────────┐
    │     │  CARRYING OUT    │
    │     │  IDENTIFICATION  │
    │     │    PROCESS       │
    │     └────────┬────────┘
    │              │
    │         ┌────┴────┐
    │         │   END    │
    │         └─────────┘
```

<table>
<tr><td colspan="2" align="center">**INTERNATIONAL SEARCH REPORT**</td><td colspan="2">International application No.<br>PCT/JP2011/051048</td></tr>
</table>

| A. CLASSIFICATION OF SUBJECT MATTER |
|---|
| *H04N7/18*(2006.01)i, *G08B25/00*(2006.01)i, *H04N5/225*(2006.01)i, *H04N5/232*(2006.01)i |
| According to International Patent Classification (IPC) or to both national classification and IPC |

| B. FIELDS SEARCHED |
|---|
| Minimum documentation searched (classification system followed by classification symbols)<br>H04N7/18, G08B25/00, H04N5/225, H04N5/232 |
| Documentation searched other than minimum documentation to the extent that such documents are included in the fields searched<br>Jitsuyo Shinan Koho        1922–1996   Jitsuyo Shinan Toroku Koho   1996–2011<br>Kokai Jitsuyo Shinan Koho   1971–2011   Toroku Jitsuyo Shinan Koho   1994–2011 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| Y | JP 2005-244279 A  (Matsushita Electric Industrial Co., Ltd.), 08 September 2005 (08.09.2005), paragraphs [0033] to [0051], [0069] to [0071]; fig. 1 to 5, 9 & WO 2005/081530 A1 | 1-5 |
| Y | JP 2002-290962 A  (Mitsubishi Electric Corp.), 04 October 2002 (04.10.2002), paragraphs [0016], [0028], [0029] (Family: none) | 1-5 |
| Y | JP 2001-136565 A  (Mitsubishi Electric Corp.), 18 May 2001 (18.05.2001), paragraph [0024] (Family: none) | 2 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    25 March, 2011 (25.03.11) | Date of mailing of the international search report<br>    05 April, 2011 (05.04.11) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2011/051048 |

C (Continuation).   DOCUMENTS CONSIDERED TO BE RELEVANT

| Category* | Citation of document, with indication, where appropriate, of the relevant passages | Relevant to claim No. |
|---|---|---|
| Y | Yasuhide HYODO et al., "Robust Multiple-human Tracking against Occlusion through Camera Network", IPSJ SIG Notes, 2008-CVIM-164, Computer Vision and Image Media, 29 August 2008 (29.08.2008), vol.2008, no.82, pages 171 to 176 | 3 |

Form PCT/ISA/210 (continuation of second sheet) (July 2009)

**EP 2 549 752 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006310901 A